**Europäisches Patentamt**

**European Patent Office**

**Office européen des brevets**

(19)

(11) Numéro de publication: **0 087 358**
**B1**

# FASCICULE DE BREVET EUROPEEN

(12)

(45) Date de publication du fascicule du brevet:
08.01.86

(21) Numéro de dépôt: 83400310.5

(22) Date de dépôt: 14.02.83

(51) Int. Cl.⁴: **C 01 G 43/06**, G 21 C 19/48,
C 01 G 56/00

(54) **Procédé de purification d'hexafluorure d'uranium contenant des traces de fluorure de plutonium et/ou de fluorure de neptunium.**

(30) Priorité: **24.02.82 FR 8203021**

(43) Date de publication de la demande:
**31.08.83 Bulletin 83/35**

(45) Mention de la délivrance du brevet:
**08.01.86 Bulletin 86/2**

(84) Etats contractants désignés:
**BE DE GB NL**

(56) Documents cités:
**FR - A - 2 111 730**
**GB - A - 979 884**
**US - A - 2 822 239**
**US - A - 3 046 089**
**US - A - 3 178 258**

**"GMELIN HANDBUCH DER ANORGANISCHEN
CHEMIE", 8th Edition, "U-URAN", 1980, page 38,
Springer-Verlag, Berlin DE;**

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**

(72) Inventeur: **Aubert, Jacques, La Garde Adhémar,
F-26700 Pierrelatte (FR)**
Inventeur: **Bethuel, Louis, 12, Hameau de la Croix d'Or,
F-26700 Pierrelatte (FR)**
Inventeur: **Carles, Maurice, 2 Bld. Laennec,
F-26700 Pierrelatte (FR)**

(74) Mandataire: **Mongrédien, André et al, c/o
BREVATOME 25, rue de Ponthieu, F-75008 Paris (FR)**

EP 0 087 358 B1

## Description

La présente invention a pour objet un procédé de purification d'hexafluorure d'uranium contenant des traces de fluorure de plutonium et/ou de fluorure de neptunium.

On sait que l'une des sources prinicpales d'hexafluorure d'uranium pour la séparation des isotopes d'uranium par diffusion gazeuse provient du retraitement des combustibles irradiés. Lors du retraitement, les combustibles sont traités généralement par voie humide pour séparer l'uranium, le plutonium et d'autres éléments transuraniens. A la fin de ce retraitement, on récupère généralement l'uranium sous la forme d'une solution de nitrate d'uranyle qui contient encore des traces de neptunium et de plutonium produisant un rayonnement alpha de l'ordre de 5000 d.p.m. (désintégrations par minute) par gramme d'uranium (norme UNIREP < 15000 dpm $g^{-1}$ U avec Pu/U$_{total}$ < $10^{-8}$). Ce nitrate d'uranyle est ensuite transformé par fluoration en hexafluorure d'uranium qui contient de ce fait lui aussi des traces de neptunium et de plutonium sous la forme d'hexafluorure. Après l'étape de fluoration, on obtient cependant une activité moindre en neptunium et en plutonium. Néanmoins, il est souhaitable de ramener à la valeur la plus faible possible le taux d'hexafluorure de neptunium et d'hexafluorure de plutonium présents dans l'hexafluorure d'uranium pour introduire le minimum d'émetteurs radioactifs α autres que les isotopes de l'uranium dans les usines de séparation isotopique; de plus, l'adoption de ce procédé permettrait de diminuer fortement la norme actuellement admise de 1500 désintégrations α autres que celles des isotopes de l'uranium par minute et par gamme d'uranium sous forme UF$_6$.

Jusqu'à présent, pour purifier l'hexafluorure d'uranium gazeux contenant de l'hexafluorure de plutonium ou de l'hexafluorure de neptunium à titre d'impuretés, on a utilisé un procédé consistant à fixer les fluorures volatils sur un fluorure solide tel que le fluorure de sodium ou le fluorure de magnésium, et à vaporiser ensuite préférentiellement l'hexafluorure d'uranium par chauffage du complexe solide. On a également envisagé l'utilisation d'autres fluorures métalliques tels que le fluorure de cobalt et le tétrafluorure de soufre, pour réduire sélectivement l'hexafluorure de neptunium et l'hexafluorure de plutonium et les séparer ainsi de l'hexafluorure d'uranium. De tels procédés sont en particulier décrits dans les demandes publiées françaises n° 2 111 730, 2 034 805 et dans les brevets américaines n° 3 046 089, 3 708 568 et 3 615 267.

Cependant, de tels procédés ne permettent pas de purifier dans de bonnes conditions l'hexafluorure d'uranium contenant également des traces de F$_2$ ou ClF$_3$ car ces produits très fluorants réagissent en premier sur le fluorure de cobalt CoF$_2$ pour donner CoF$_3$ qui est solide. De ce fait, il y a formation d'une croûte peu perméable qui perturbe la réaction du CoF$_2$ restant avec PuF$_6$ et NpF$_6$.

La présente invention a pour objet un procédé de purification d'hexafluorure d'uranium gazeux contenant des traces d'hexafluorure de plutonium et/ou d'hexafluorure de neptunium, qui présente l'avantage de conduire à de l'hexafluorure d'uranium ayant un bon degré de pureté, même lorsqu'il contient également du F$_2$ et/ou du ClF$_3$.

Le procédé selon l'invention de purification d'hexafluorure d'uranium contenant des traces de fluorure de neptunium et/ou de fluorure de plutonium se caractérise en ce que l'on met en contact l'hexafluorure d'uranium à purifier avec un fluorure métallique choisi dans le groupe comprenant le fluorure de plomb PbF$_2$, les fluorures d'uranium de formule UF$_{4+x}$ dans laquelle x a une valeur allant de 0 à 1 et le trifluorure de chrome CrF$_3$, à une température telle que les fluorures de plutonium et/ou de neptunium soient réduits, et en ce que l'on récupère l'hexafluorure d'uranium ainsi purifié.

Avantageusement, lorsque le fluorure métallique est du fluorure de plomb PbF$_2$, on met en contact l'hexafluorure d'uranium avec ce fluorure de plomb à une température de 70 à 150°C.

Lorsque le fluorure métallique utilisé est du trifluorure de chrome CrF$_3$, on met en contact l'hexafluorure d'uranium avec ce trifluorure de chrome à une température de 70 à 200°C.

Lorsque le fluorure métallique utilisé est un fluorure d'uranium de formule UF$_{4+x}$, on met en contact l'hexafluorure d'uranium avec ce fluorure d'uranium à une température de 70 à 250°C.

Dans chaque cas, la température est choisie de façon à obtenir la réactivité la plus élevée possible entre les gaz et le fluorure métallique, tout en étant compatible avec le maintien d'une bonne stabilité en surface du fluorure métallique utilisé.

Selon l'invention, le fluorure métallique peut être utilisé directement sous forme de poudre ou sous forme de poudre disposée sur un support en matériau inerte constitué par exemple par des billes d'alumine ou encore par un tube macroporeux en alumine ou en nickel. Dans ce dernier cas, le tube macroporeux est revêtu d'une couche microporeuse de poudre dudit fluorure métallique.

De préférence, la poudre de fluorure métallique présente une surface spécifique BET de 1 à 25 m$^2$/g.

En effet, si la surface spécifique de la poudre est trop faible, cette dernière ne présente pas une capacité suffisante de traitement. En revanche, avec des surfaces spécifiques élevées, la poudre présente une bonne capacité de traitement.

Selon un mode de mise en œuvre du procédé de l'invention, particulièrement adapté au traitement d'hexafluorure d'uranium contenant également des traces d'agents fluorants tels que le fluor ou le trifluorure de chlore, on met tout d'. bord en contact l'hexafluorure d'uranium à purifier avec un fluorure d'uranium de formule UF$_{4+x}$ à une température de 70 à 250°C et l'on met ensuite en contact le fluorure d'uranium ainsi traité avec un fluorure métallique choisi dans le groupe comprenant le fluorure de plomb PbF$_2$ et le trifluorure de chrome à une température telle que les fluorures de plutonium et de neptunium soient réduits.

Dans ce cas, on utilise la propriété du fluorure d'uranium UF$_{4+x}$ de réagir avec les agents fluorants pour former de l'hexafluorure d'uranium volatil, ce qui évite la formation d'une croûte peu perméable à la surface du fluorure métallique, et permet de ce fait d'utiliser tout le fluorure d'uranium pour réduire l'hexafluorure de neptunium et l'hexafluorure de plutonium.

De préférence, pour améliorer les résultats obtenus, on utilise deux pièges successifs dont le premier ($UF_4$) assure notamment l'élimination des agents fluorants tels que le fluor et le trifluorure de chlore, et le second ($PbF_2$, $CrF_3$) permet d'améliorer le taux de purification de l'hexafluorure d'uranium.

Pour la mise en œuvre du procédé de l'invention, on utilise un réacteur contenant le fluorure métallique constitué par du fluorure de plomb $PbF_2$, du fluorure d'uranium $UF_{4+x}$ ou du trifluorure de chrome $CrF_3$, sous la forme de poudre, de granulés ou de billes disposés dans des plateaux ajourés, et on fait circuler l'hexafluorure d'uranium à purifier à l'intérieur de ce réacteur.

On peut aussi utiliser un réacteur contenant le fluorure métallique sous la forme d'éléments cylindriques creux comportant un support macroporeux en alumine ou en nickel revêtu d'une couche microporeuse du fluorure métallique. Dans ce cas, le revêtement est généralement effectué à l'intérieur des tubes et les éléments composites creux sont obturés à l'une de leurs extrémités et disposés verticalement dans le réacteur; l'hexafluorure d'uranium à purifier est introduit à l'intérieur de ces éléments, puis il passe à travers la couche microporeuse de fluorure métallique par percolation pour qu'il se produise une réaction entre les gaz et le fluorure métallique. Dans le cas d'éléments composites cylindriques creux, on peut aussi utiliser des éléments revêtus extérieurement d'une couche microporeuse de fluorure métallique et introduire dans ce cas, l'hexafluorure d'uranium à l'extérieur des éléments et récupérer l'hexafluorure d'uranium purifié à l'intérieur des éléments cylindriques creux.

Lorsque le fluorure métallique est sous forme de poudre, on peut utiliser d'autres dispositifs de traitement, en particulier des installations à lit fixe ou à lit tournant.

Généralement, on réalise la mise en contact de l'hexafluorure d'uranium avec le fluorure métallique, en opérant sous une pression de 100 à 3000 hPa, pression devant être inférieure à celle de la pression de vapeur de l'$UF_6$ à la température considérée.

En ce qui concerne le débit d'hexafluorure d'uranium, celui-ci est choisi en fonction des caractéristiques géométriques de l'installation et de la forme physique (poudre, billes, etc. ...) du fluorure utilisée, pour obtenir la décontamination souhaitée sans perte de charge trop importante.

D'autres avantages et caractéristiques de l'invention apparaîtront mieux à la lecture des exemples suivants donnés bien entendu à titre illustratif et non limitatif.

### Exemple 1

Cet exemple illustre l'emploi de fluorure de plomb sous la forme de pastilles ayant une surface spécifique de $0,1 \text{ m}^2 . \text{g}^{-1}$ obtenues à partir d'une poudre du commerce (Riedel de Haën) pour purifier de l'hexafluorure d'uranium contenant 23 à 24 p.p.m. (parties en poids par million) d'hexafluorure de neptunium.

Dans cet exemple, on utilise un réacteur cylindrique ayant un diamètre de 10 mm et une zone active de longueur égale à 750 mm. Cette zone active est remplie de pastilles de fluorure de plomb et l'on dispose à chaque extrémité de la colonne de pastilles, des pastilles d'alumine pure pour obtenir en fonctionnement une température homogène dans toute la colonne de pastilles de fluorure de plomb.

On soumet tout d'abord les pastilles de fluorure de plomb à un traitement de dégazage effectué à 150°C tout d'abord pendant 3 heures sous balayage d'azote, puis pendant 3 heures sous vide.

Après ce dégazage, on introduit dans le réacteur maintenu à une température de 150°C, de l'hexafluorure d'uranium sous une pression de 950 hPa à un débit de 0,02 g d'U par seconde, c'est-à-dire une vitesse superficielle de $2 \text{ cm} . \text{s}^{-1}$, pendant les 25 premières minutes, puis à un débit de 0,081 g d'U par seconde, soit une vitesse superficielle de $16 \text{ cm} . \text{s}^{-1}$ pendant deux heures 35 minutes. On détermine périodiquement la teneur en neptunium du gaz sortant du réacteur par comptage alpha. En fin d'opération, on détermine la quantité de neptunium fixée sur les pastilles de fluorure de plomb.

Les résultats obtenus sont donnés dans le tableau 1 ci-joint. Au vu de ces résultats, on constate que le facteur de décontamination F en neptunium qui est égal au rapport:

$$F = \frac{NpF_6/UF_6 \text{ avant purification}}{NpF_6/UF_6 \text{ après purification}}$$

est de 540 à 550 en début d'opération, ce qui montre que les pastilles de $PbF_2$ possèdent une bonne efficacité pour la réduction sélective du neptunium.

En revanche, la capacité de traitement de telles pastilles est plus limitée.

On précise que la capacité de traitement correspond à la masse d'hexafluorure d'uranium contenant 1 p.p.m. d'hexafluorure de neptunium susceptible d'être traité par 1 g de poudre de fluorure de plomb afin d'obtenir à la sortie du réacteur de l'hexafluorure d'uranium ne contenant plus de neptunium. Cette capacité est déterminée à partir de la quantité de neptunium fixée sur la poudre en fin d'opération lorsque la colonne de fluorure métallique est saturée de neptunium. Dans cet exemple, la capacité maximale observée est de 0,53 kg $UF_6$/g $PbF_2$.

### Exemple 2

Cet exemple concerne la purification d'hexafluorure d'uranium contenant 3 à 4 p.p.m. de neptunium au moyen de billes d'alumine alpha imprégnées de fluorure de plomb $PbF_2$ qui ont été préparées de la façon suivante.

On ajoute par fractions de l'oxyde de plomb PbO dans une solution d'acide fluosilicique $H_2SiF_6$ à 690 g/l sous agitation et en quantité stoechiométrique tout en maintenant la température à 40°C. On place des billes d'alumine dans un ballon sous vide, on fait entrer, sous vide, la solution de fluosilicate de plomb obtenue précédemment et on laisse les billes s'imprégner pendant deux heures. On sépare les billes de l'excès de solution, on les égoutte et on les sèche sous vide à une température de 30 à 40°C. Après séchage, on chauffe lentement les billes dans une étuve sous vide à une température de 250°C en trois heures, et on maintient cette température pendant trois heures, ce qui assure la décomposition thermique du fluosilicate de plomb en fluorure de plomb. Le taux de fluorure de plomb fixé est de 21,9% et la surface spécifique BET des billes imprégnées est de 0,26 m$^2$/g, ce qui correspond à une surface spécifique d'environ 1,2 m$^2$/g pour le fluorure de plom inclus.

On dispose les billes d'alumine imprégnées de fluorure de plomb ainsi obtenues dans un réacteur ayant un diamètre de 8 mm et une zone active d'une longueur de 750 mm et l'on dispose à chaque extrémité comme précédemment des billes d'alumine pure ayant une surface spécifique d'environ 0,1 m$^2$/g. On soumet les billes imprégnées à un traitement de dégazage réalisé sous azote à 150°C pendant deux heures, puis à un prétraitement au moyen de tétrafluorure de soufre sous une pression de 270 hPa à 150°C pendant deux heures pour éliminer toute trace d'eau des billes imprégnées. Ensuite, on introduit dans le reacteur de l'hexafluorure d'uranium contenant 3 à 4 p.p.m. d'hexafluorure de neptunium à un débit de 0,105 g U/s, sous une pression de 900 hPa, ce qui correspond à une vitesse superificielle de 26,5 cm/s en maintenant le réacteur à une température de 150°C.

Comme dans l'exemple 1, on détermine périodiquement la teneur en neptunium des gaz sortant du réacteur et on détermine en fin d'opération la quantité de neptunium fixée sur les billes d'alumine pour déterminer la capacité maximale. Les résultats obtenus sont donnés dans le tableau 1 ci-joint.

*Exemple 3*

On suit le même mode opératoire que dans l'exemple 2, en utilisant les mêmes billes d'alumine imprégnées de fluorure de plomb et un réacteur de 10 mm de diamètre sur 750 mm de longueur, pour traiter de l'hexafluorure d'uranium contenant 21-25 p.p.m. de neptunium. L'hexafluorure d'uranium est introduit dans le réacteur à un débit de 0,0956 g U/s, ce qui correspond à une vitesse superficielle de 17 cm/s, sous une pression de 900 hPa et en réalisant l'essai pendant quatre heures à une température de 150°C.

Les résultats obtenus sont donnés dans le tableau 1 ci-joint.

Au vu de ces résultats, on constate que la capacité est plus importante que dans l'exemple 2 mais que les facteurs de décontamination sont plus faibles que dans les exemples 1 et 2.

*Exemple 4*

Dans cet exemple, on utilise de la poudre de fluorure de plomb PbF$_2$, d'une surface spécifique de 3,2 m$^2$/g. Cette poudre a été préparée à partir d'une solution de silicate de plomb identique à celle utilisée dans l'exemple 2 pour imprégner les billes d'alumine. Dans ce cas, on a concentré la solution de fluosilicate de plomb à l'évaporateur rotatif à 45°C, ce qui conduit à l'obtention des cristaux solides de fluosilicate de plomb PbSiF$_6$, 4H$_2$O qui sont ensuite séchés à l'étuve à 40°C puis décomposés sous vide à une température modérée de 250° pendant deux heures, ce qui permet d'obtenir une grande surface spécifique.

Dans cet exemple, on utilise un réacteur comprenant un tube en alliage de nickel connu sous la marque Monel dans lequel sont disposés 7 plateaux de fritté en Monel entre lesquels on a placé la poudre de fluorure de plomb. Le tube est chauffé par des résistances électriques englobées dans deux demi-coquilles en cuivre rouge et la température est maintenue constante à 150°C.

On soumet tout d'abord la poudre à un traitement de dégazage réalisé pendant deux heures à 150°C sous balayage, puis à un prétraitement, à 150°C, pendant deux heures, au moyen de tétrafluorure de soufre sous une pression de 270 hPa. On introduit ensuite dans le réacteur l'hexafluorure d'uranium contenant 15-16 p.p.m. de neptunium sous une pression de 800 à 900 hPa à un débit de 0,093 g U/s pendant les 20 premières minutes, à un débit de 0,023 g/s pendant les 70 minutes qui suivent, et enfin à un débit de 0,093 g U/s jusqu'à la fin de l'opération qui dure au total trois heures.

Lorsque le débit d'uranium est de 0,023 g/s, la vitesse superficielle est de 1,4 cm/s et lorsque le débit d'uranium est de 0,093 g U/s, la vitesse superficielle est de 6 cm/s.

Comme précédemment, on détermine périodiquement la teneur en neptunium du gaz sortant du réacteur et on détermine en fin d'opération le poids de neptunium fixé sur la poudre de PbF$_2$. Les résultats obtenus sont donnés dans le tableau 1 joint.

*Exemple 5*

Dans cet exemple, on utilise un réacteur à plateaux analogue à celui de l'exemple 4, et l'on dispose entre les plateaux de la poudre de tétrafluorure d'uranium ayant une surface spécifique de 0,85 m$^2$/g.

On soumet tout d'abord la poudre à un traitement de dégazage sous vide pendant deux heures à 100°C, et à un prétraitement au moyen de tétrafluorure de soufre réalisé sous une pression de 130 hPa pendant une heure 30 minutes à 100°C. Ensuite, on introduit dans le réacteur de l'hexafluorure d'uranium contenant 22 à 29 p.p.m. de NpF$_6$. Au début, on opère à une température de 120°C, avec un débit de 0,02 g U/s, ce qui correspond à une vitesse superficielle de 1,2 cm/s pendant les 45 premières minutes, puis à une température de 120°C avec un débit de 0,079 g U/s, ce qui correspond à une vitesse superficielle de 4,6 cm/s pendant les 105 minutes qui suivent, et enfin à une température de 150°C avec le même débit d'uranium (0,079 g U/s) pendant les 30 dernières minutes. La durée totale de traitement est de 3 heures et on opère sous une pression de 800 à 900 hPa.

Les résultats obtenus sont donnés dans le tableau 2 joint.

Au vu de ce tableau, on constate qu'au début du traitement, c'est-à-dire à faible débit à 120°C, l'efficacité est faible puisque le facteur de contamination est égal à 26, mais qu'elle augmente ensuite à débit plus élevé puis rechute avec le temps.

Lorsque la température passe de 120 à 150°C, l'efficacité augmente à nouveau, mais rechute progressivement. Ceci est dû à la saturation progressive en NpF$_5$ et NpF$_4$ du fluorure d'uranium UF$_4$ ou UF$_5$ ou U$_2$F$_9$.

On observe que la capacité de traitement est excellente.

*Exemple 6*

On utilise le même réacteur à plateaux que l'on remplit également de poudre de tétrafluorure d'uranium ayant une surface spécifique de 0,85 m²/g. On réalise un traitement de dégazage de la poudre sous balayage d'azote à 100°C pendant deux heures et un prétraitement par le tétrafluorure de soufre dans les mêmes conditions que celles de l'exemple 5, puis on introduit dans le réacteur de l'hexafluorure d'uranium contenant 32 à 41 p.p.m. de $NpF_6$, à un débit de 0,081 g U/s sous une pression de 900 hPa à une température de 70°C pendant la première heure, puis de 120°C pendant la deuxième heure, et de 150°C pendant la troisième heure. Dans ces conditions, la vitesse superficielle du gaz est de 3,4 cm/s$^{-1}$ pendant la première heure, de 4 cm/s pendant la deuxième heure et de 4,2 cm/s pendant la troisième heure. Comme précédemment, on détermine périodiquement la teneur en neptunium du gaz sortant du réacteur. En fin d'opération, on détermine également les quantités de neptunium fixées sur la poudre. Les résultats obtenus sont donnés dans le tableau 2 joint.

Au vu des résultats donnés dans ce tableau, on constate que l'efficacité est maximale à 150°C.

*Exemple 7*

Dans cet exemple, on utilise des pastilles à base de trifluorure de chrome $CrF_3$ présentant une surface spécifique de 5,3 m²/g. Ces pastilles sont préparées par compression d'une poudre à base de trifluorure de chrome obtenue de la façon suivante.

On ajoute à une solution aqueuse d'acide fluorhydrique à 50% de la poudre d'hydroxyde de chrome $Cr(OH)_3$ dans la proportion de 15 moles de $Cr(OH)_3$ pour 46 moles de HF. On réalise l'addition de $Cr(OH)_3$ sous agitation à une température maintenue constante de 80°C, puis on laisse refroidir, on filtre le précipité et on le sèche à 100°C, ce qui conduit à l'obtention d'une poudre de $CrF_3$ $3H_2O$. Cette poudre est ensuite pastillée à l'aide d'une presse à poinçon pour former des petits cylindres de dimensions 4 × 4 mm puis on décompose ces pastilles dans un four sous vide à 275°C pendant trois heures pour obtenir des pastilles contenant du trifluorure de chrome. Ces pastilles sont introduites dans un réacteur analogue à celui utilisé dans les exemples 1 à 3, puis soumises à un traitement de dégazage réalisé tout d'abord sous balayage d'argon pendant trois heures à 150°C, puis sous vide pendant trois heures à 150°C.

On introduit ensuite dans le réacteur maintenu à 150°C de l'hexafluorure d'uranium contenant 20 à 31 p.p.m. de $NpF_6$, sous une pression de 1000 hPa à un débit de 0,02 g U/s, ce qui correspond à une vitesse superficielle de 4 cm/s, pendant une heure 35 minutes, et à débit de 0,081 g U/s, ce qui correspond à une vitesse superficielle de 16 cm/s jusqu'à la fin de l'opération qui dure au total trois heures 5 minutes.

On détermine périodiquement la teneur en neptunium du gaz sortant du réacteur et en fin d'opération, on détermine la quantité de neptunium fixée sur les pastilles à base de trifluorure de chrome. Les résultats obtenus sont donnés dans le tableau 2 joint.

*Exemple 8*

Dans cet exemple, on utilise des pastilles de 4 × 4 mm à base de trifluorure de chrome ayant une surface spécifique de 8 m²/g, qui ont été obtenues de la même façon que dans l'exemple 7, mais en réalisant la décomposition thermique du $CrF_3$, $3H_2O$ sous vide primaire ($10^{-1}$ hPa) par montée progressive, en deux heures, de la température jusqu'à 275°C et maintien de cette température de 275° pendant trois heures.

On dispose ces pastilles dans un réacteur ayant un diamètre de 10 mm et une zone active d'une longueur de 7 cm et on place à chaque extrémité de la colonne de pastilles de $CrF_3$ des pastilles en alumine pure ayant une surface spécifique de 0,1 m²/g, puis on soumet les pastilles à un traitement de dégazage réalisé tout d'abord sous balayage d'azote à 150°C pendant trois heures puis sous vide à 150°C pendant trois heures. On introduit ensuite dans le réacteur de l'hexafluorure d'uranium sous une pression de 900 hPa, en maintenant le réacteur à une température de 150°C, avec un débit de 0,02 g U/s, ce qui correspond à une vitesse superficielle de 4 cm/s pendant la première heure, puis à un débit de 0,081 g U/s, ce qui correspond à une vitesse superficielle de 15 cm/s pendant les deux heures suivantes.

On détermine périodiquement la teneur en neptunium du gaz sortant du réacteur et en fin d'opération, on détermine la quantité de neptunium fixée sur les pastilles à base de $CrF_3$.

Les résultats obtenus sont donnés dans le tableau 2 joint.

Au vu de ce tableau, on constate que le facteur de décontamination varie avec le temps car la saturation est très vite atteinte, la capacité maximale est de 3,8 kg d'hexafluorure d'uranium à 1 p.p.m. de neptunium par gramme de fluorure de chrome.

## TABLEAU 1

| Exemple | 1 | | 2 | | 3 | | 4 | |
|---|---|---|---|---|---|---|---|---|
| $PbF_2$ | Pastilles à 0,1 m².g$^{-1}$ | | Billes imprégnées 1,2 m².g$^{-1}$ | | Billes imprégnées 1,2 m².g$^{-1}$ | | Poudre 3 m².g$^{-1}$ | |
| Teneur en Np | Np (ppm) | F | Np (ppm) | F | Np (ppm) | F | Np (ppm) | F |
| à l'entrée | 23-34 | | 3-4 | | 21-25 | | 15-16 | |
| à la sortie | | | | | | | | |

TABLEAU 1 (suite)

| Exemple | 1 | | 2 | | 3 | | 4 | |
|---|---|---|---|---|---|---|---|---|
| PbF$_2$ | Pastilles à 0,1 m$^2$.g$^{-1}$ | | Billes imprégnées 1,2 m$^2$.g$^{-1}$ | | Billes imprégnées 1,2 m$^2$.g$^{-1}$ | | Poudre 3 m$^2$.g$^{-1}$ | |
| Teneur en Np | Np (ppm) | F | Np (ppm) | F | Np (ppm) | F | Np (ppm) | F |
| après 5 minutes | | | | | 2,30 | 8 | | |
| 10 | | | 0,19 | 16 | | | | |
| 25 | 0,042 | 540 | | | | | 0,044 | 340 |
| 30 | | | 0,15 | 22 | 8,54 | 2,3 | | |
| 35 | | | | | | | 0,058 | 260 |
| 45 | | | | | | | 0,044 | 340 |
| 1 heure | 0,043 | 550 | | | 10,79 | 1,9 | | |
| 1 h 30 min. | 0,179 | 140 | 0,049 | 73 | | | 0,057 | 260 |
| 2 heures | 0,087 | 250 | 0,099 | 38 | 6,61 | 3,4 | | |
| 2 h 20 min. | 0,022 | 1200 | | | | | | |
| 2 h 30 min. | | | 0,103 | 38 | | | 0,047 | 325 |
| 2 h 50 min. | 0,028 | 814 | | | | | | |
| 3 heures | | | | | 8,08 | 3,0 | 0,052 | 300 |
| 4 heures | | | | | 10 | 2,6 | | |
| Capacité maximale observée en Kg d'UF$_6$ à 1 ppm de NpF$_6$ par g de PbF$_2$ | 0,53 | | 1,84 | | 2 | | 10 | |

TABLEAU 2

| Exemple | 5 | | 6 | | 7 | | 8 | |
|---|---|---|---|---|---|---|---|---|
| Fluorure métallique | Poudre UF$_4$ 0,85 m$^2$ g$^{-1}$ | | Poudre UF$_4$ 0,85 m$^2$ g$^{-1}$ | | Pastilles CrF$_3$ 5,3 m$^2$ g$^{-1}$ | | Pastilles CrF$_3$ 8 m$^2$ g$^{-1}$ | |
| Teneur en Np | Np (ppm) | F | Np (ppm) | F | Np (ppm) | F | Np (ppm) | F |
| à l'entrée | 22-29 | | 32-41 | | 32-41 | | 23-26 | |
| à la sortie | | | | | | | | |
| après 5 minutes | | | | | | | | |
| 10 | | | | | | | | |
| 25 | 1,049 | 26 | | | 0,052 | 420 | 0,89 | 27 |
| 30 | | | 32,84 | | | | | |
| 35 | 0,039 | 700 | | | | | | |
| 40 | | | 4,57 | 7,4 | | | | |
| 45 | 0,017 | 1600 | | | | | | |
| 1 heure | | | 4,66 | 7,3 | 0,087 | 275 | 10,5 | 2,3 |
| 1 h 10 min. | | | | | | | | |
| 1 h 15 min. | | | 2,25 | 15,3 | | | | |
| 1 h 20 min. | | | | | | | | |

## TABLEAU 2 (suite)

| Exemple | 5 | | 6 | | 7 | | 8 | |
|---|---|---|---|---|---|---|---|---|
| Fluorure métallique | Poudre UF$_4$ 0,85 m$^2$ g$^{-1}$ | | Poudre UF$_4$ 0,85 m$^2$ g$^{-1}$ | | Pastilles CrF$_3$ 5,3 m$^2$ g$^{-1}$ | | Pastilles CrF$_3$ 8 m$^2$ g$^{-1}$ | |
| Teneur en Np | Np (ppm) | F | Np (ppm) | F | Np (ppm) | F | Np (ppm) | F |
| 1 h 30 min. | 0,134 | 210 | | | 0,111 | 230 | 7,2 | 3,4 |
| 2 heures | | | 2,67 | 13,5 | 0,142 | 125 | 11,5 | 2,2 |
| 2 h 15 min. | | | 0,899 | 40,6 | | | | |
| 2 h 20 min. | | | | | 0,082 | 128 | 12,4 | 2 |
| 2 h 30 min. | 1,67 | 17 | | | | | | |
| 2 h 50 min. | | | | | 0,147 | 210 | 12,5 | 2,1 |
| 3 heures | 0,61 | 47 | 1,24 | 30,7 | | | | |
| 3 h 5 min. | | | | | | | | |
| 4 heures | | | | | | | | |
| Capacité maximale observée en Kg d'UF$_6$ à 1 ppm de NpF$_6$ par g d'UF$_4$ ou de CrF$_3$ | 30 | | 27 | | 1,2 | | 3,8 | |

## Revendications

1. Procédé de purification d'hexafluorure d'uranium contenant des traces de fluorure de neptunium et/ou de fluorure de plutonium, caractérisé en ce que l'on met en contact l'hexafluorure d'uranium à purifier avec un fluorure métallique choisi dans le groupe comprenant le fluorure de plomb PbF$_2$, les fluorures d'uranium de formule UF$_{4+x}$ dans laquelle x a une valeur allant de 0 à 1 et le trifluorure de chrome CrF$_3$, à une température telle que les fluorures de plutonium et/ou de neptunium soient réduits, et en ce que l'on récupère l'hexafluorure d'uranium ainsi purifié.

2. Procédé selon la revendication 1, caractérisé en ce que le fluorure métallique étant le fluorure de plomb, on met en contact l'hexafluorure d'uranium avec ce fluorure de plomb à une température de 70 à 150°C.

3. Procédé selon la revendication 1, caractérisé en ce que le fluorure métallique étant le fluorure de chrome CrF$_3$, on met en contact l'hexafluorure d'uranium avec le fluorure de chrome à une température de 70 à 200°C.

4. Procédé selon la revendication 1, caractérisé en ce que le fluorure métallique étant un fluorure d'uranium de formule UF$_{4+x}$, on met en contact l'hexafluorure d'uranium avec ce fluorure d'uranium à une température de 70 à 250°C.

5. Procédé selon l'une quelconque des revendications 1 à 4, caractérisé en ce que le fluorure métallique est sous la forme de poudre.

6. Procédé selon la revendication 5, caractérisé en ce que la poudre a une surface spécifique BET de 1 à 25 m$^2$/g.

7. Procédé selon l'une quelconque des revendications 5 et 6, caractérisé en ce que la poudre de fluorure métallique est disposée sur un support inerte.

8. Procédé selon la revendication 7, caractérisé en ce que le support inerte est constitué par des billes d'alumine.

9. Procédé selon la revendication 7, caractérisé en ce que le support inerte est constitué par un tube macroporeux en alumine ou en nickel qui est revêtu d'une couche microporeuse dudit fluorure métallique.

10. Procédé selon l'une quelconque des revendications 1 à 9, caractérisé en ce que l'hexafluorure d'uranium contient également des traces d'agent fluorant et en ce que l'on met tout d'abord en contact, à une température de 70 à 250°C l'hexafluorure d'uranium à purifier avec un fluorure d'uranium de formule UF$_{4+x}$, et l'on met ensuite en contact l'exafluorure d'uranium ainsi traité avec un fluorure métallique choisi dans le groupe comprenant le fluorure de plomb PbF$_2$ et le trifluorure de chrome, à une température telle que les fluorures de plutonium et/ou de neptunium soient réduits.

## Patentansprüche

1. Verfahren zur Reinigung von Uraniumhexafluorid, welches Spuren von Neptuniumfluorid und/oder Plutoniumfluorid enthält, dadurch gekennzeichnet, dass man das zu reinigende Uraniumhexafluorid mit einem Metallfluorid, welches aus der Bleifluorid PbF$_2$, die Uraniumfluoride mit der Formel UF$_{4+x}$, in der x einen Wert von 0 bis 1 hat, und Chromtrifluorid umfassenden Gruppe ausgewählt ist, bei einer solchen Temperatur in Berührung bringt, dass das Neptuniumfluorid und/oder das Plutoniumfluorid reduziert werden, und dass man das derart gereinigte Uraniumhexanfluorid wieder gewinnt.

2. Verfahren nach Anspruch 1, dadurch gekennzeichnet, dass das Metallfluorid Bleifluorid ist und dass man das Uraniumhexafluorid mit dem Bleifluorid bei einer Temperatur von 70 bis 150°C in Berührung bringt.

3. Verfahren nach Anspruch 3, dadurch gekennzeichnet, dass das Metallfluorid das Chromfluorid $CrF_3$ ist und dass man das Uraniumhexafluorid mit dem Chromfluorid bei einer Temperatur von 70 bis 200°C in Berührung bringt.

4. Verfahren nach Anspruch 1, dadurch gekennzeichnet, dass das Metallfluorid ein Uraniumfluorid der Formel $UF_{4+x}$, ist und dass man das Uraniumhexafluorid mit dem Uraniumfluorid bei einer Temperatur von 70 bis 250°C in Berührung bringt.

5. Verfahren nach einem der Ansprüche 1 bis 4, dadurch gekennzeichnet, dass das Metallfluorid in Pulverform vorliegt.

6. Verfahren nach Anspruch 5, dadurch gekennzeichnet, dass das Pulver eine spezifische Oberfläche BET von 1 bis 25 $m^2$/g aufweist.

7. Verfahren nach Anspruch 5 oder 6, dadurch gekennzeichnet, dass das Metallfluoridpulver auf einem inerten Träger angeordnet ist.

8. Verfahren nach Anspruch 7, dadurch gekennzeichnet, dass der inerte Träger von Aluminiumkugeln gebildet ist.

9. Verfahren nach Anspruch 7, dadurch gekennzeichnet, dass der inerte Träger von einem makroporösen Rohr aus Tonerde oder aus Nickel gebildet ist, welches mit einer mikroporösen Schicht des genannten Metallfluorids überzogen ist.

10. Verfahren nach einem der Ansprüche 1 bis 9, dadurch gekennzeichnet, dass das Uraniumhexafluorid auch Spuren von fluorierenden Mitteln enthält und dass man zuerst das zu reinigende Uraniumhexafluorid bei einer Temperatur von 70 bis 250°C mit einem Uraniumfluorid der Formel $UF_{4+x}$ in Berührung bringt und dass man nachfolgend das derart behandelte Uraniumhexafluorid mit einem Metallfluorid, welches aus der Bleifluorid $PbF_2$ und Chromtrifluorid umfassenden Gruppe ausgewählt ist, bei einer solchen Temperatur in Berührung bringt, dass das Plutoniumfluorid und/oder das Neptuniumfluorid reduziert werden wird.

**Claims**

1. Process for the purification of uranium hexafluoride containing traces of neptunium fluoride and/or plutonium fluoride, characterised in that the uranium hexafluoride to be purified is contacted with a metal fluoride selected from the group comprising lead fluoride $PbF_2$, uranium fluorides of the formula $UF_{4+x}$ in which x has a value from 0 to 1, and chromium trifluoride $CrF_3$, at a temperature such that the fluorides of plutonium and/or neptunium are reduced, and that the uranium hexafluoride thereby purified is recovered.

2. Process according to claim 1, characterised in that, the metal fluoride being lead fluoride, the uranium hexafluoride is contacted with the lead fluoride at a temperature from 70 to 150°C.

3. Process according to claim 1, characterised in that, the metal fluoride being chromium fluoride $CrF_3$, the uranium hexafluoride is contacted with the chromium fluoride at a temperature from 70 to 200°C.

4. Process according to claim 1, characterised in that, the metal fluoride being a uranium fluoride of the formula $UF_{4+x}$, the uranium hexafluoride is contacted with said uranium fluoride at a temperature from 70 to 250°C.

5. Process according to any one of claims 1 to 4, characterised in that the metal fluoride is in powder form.

6. Process according to claim 5, characterised in that the powder has a BET specific surface area from 1 to 25 $m^2$/g.

7. Process according to either of claims 5 and 6, characterised in that the metal fluoride powder is located on an inert support.

8. Process according to claim 7, characterised in that the inert support comprises alumina spheres.

9. Process according to claim 7, characterised in that the inert support comprises a macroporous tube of alumina or nickel, on whose surface is a microporous layer of said metal fluoride.

10. Process according to any of claims 1 to 9, characterised in that uranium hexafluoride also contains traces of a fluoridizing agent, and in that the uranium hexafluoride to be purified is contacted at a temperature from 70 to 250°C with a uranium fluoride of the formula $UF_{4+x}$, and in that the thereby treated uranium hexafluoride is contacted with a metal fluoride selected from the group comprising lead fluoride $PbF_2$ and chromium trifluoride, at a temperature such that the plutonium and/or neptunium fluorides are reduced.